# EUROPEAN PATENT APPLICATION

(11) **EP 1 031 486 A2**
(43) Date of publication of application: **30.08.2000**
(21) Application number: 00200609.6
(22) Date of filing: 22.02.2000
(51) Int. Cl.: B60T 7/20, B60T 11/10, A01F 15/00

(54) **Fail safe braking system**

(30) Priority: 25.02.1999 GB 9904290
(71) Applicant: NEW HOLLAND BELGIUM N.V., B-8210 Zedelgem (BE)
(72) Inventor: Rogiers, Willy F., 8020 Oostkamp (BE)
(74) Representative: Vandenbroucke, Alberic

(57) **Abstract**

An agricultural implement, such as a baler (10), comprises a wheeled frame (11) and hitch means for attaching the implement to a tractor. It also comprises a hydraulic brake apparatus (36) which is coupled to the hydraulic brake system of the tractor. In order to ensure immobilization of the implement under conditions where the implement gets detached from the vehicle, the brake apparatus comprises a hydraulic accumulator (64) and a three-way valve (56) which is operated upon detachment of the implement. A cable (80) which has its front end attached to the tractor, is then stretched and rotates a lever (72) of the valve (56) forwardly, thereby connecting the reservoir of the pressurized accumulator (64) to the line (54) of the brake actuator (40). The accumulator can be charged by the tractor brake system via a feed line (58) and a non-return valve (62).

## Description

The present invention relates to wheeled agricultural implements, including forestry equipment, which are equipped with a brake system which is linked to the service brake system of the pulling vehicle, usually a tractor, for simultaneous actuation of both brake systems by the driver. In particular it relates to a fail safe braking system, actuating the brake system on the implement in case the pulled implement becomes detached from the pulling vehicle when driving on public roads.

Road safety regulations demand that towed vehicles can be immobilized automatically when detached from the towing vehicle by accident. Such systems are sometimes referred to as "break-off braking systems". It is already known in the art to use to this end the parking brake system of the trailed vehicle itself. Commonly the parking brake has a lever or wrench system for loading the actuator of the brakes. Such manual system is of no direct use in case of sudden detachment of the implement, because the driver first has to leave his vehicle before he can get access to the lever or wrench on a possibly moving implement.

It is an object of the present invention to provide an improved brake apparatus for a trailed implement which is capable of arresting this implement without further intervention of the operator in cases when the implement becomes detached from the tractor.

According to the invention there is provided an agricultural implement, comprising:
a frame;
a pair of wheels mounted for rotation to said frame;
means for attaching said frame to a towing vehicle; and
service brake apparatus for immobilizing said wheels to said frame, said brake apparatus comprising a hydraulic brake actuator and hydraulic circuitry which includes coupling means for connecting said circuitry to a hydraulic brake circuit of the towing vehicle, thereby enabling operation of said brake actuator by means of the brake circuit of the towing vehicle;
   characterized in that said brake apparatus further comprises accumulator means connected to said circuitry via valve means for operating said brake actuator when said implement becomes detached from said towing vehicle.

Advantageously, the valve means is movable between a service brake position in which the actuator is connected to the brake circuit of the towing vehicle and a safety brake position in which the actuator is connected to the accumulator. In this manner the brakes are always connected to one or other source of pressurized fluid. This may be accomplished through a three-way valve.

In a simple, yet reliable embodiment, the valve is operated through mechanical control means, e.g. a lever, which is connected by a linkage, such as a cable, to the towing vehicle. To prevent unwanted movement of the lever, it may be held in the service position by retainer means, such as a cable tie, which can be broken under a relatively small force from the linkage. A safety ring provided in the mechanical control means prevents permanent damage to the apparatus when the lever is pulled forwardly. The ring opens under a force large enough to break the cable tie, but small enough to prevent deformation of the lever, the valve or the hydraulic lines.

The accumulator may be charged by the tractor brake system via a line parallel to the three-way valve and a non-return valve, maintaining the pressure in the accumulator when the implement is detached. Such arrangement also provides the means permitting actuation of the brake actuator by the tractor brake mechanism in case the valve is in its safety brake position.

An embodiment of the invention will now be described in further detail, with reference to the accompanying drawings, in which:
Figure 1 is a side elevational view of an agricultural baler comprising an axle provided with a parking brake;

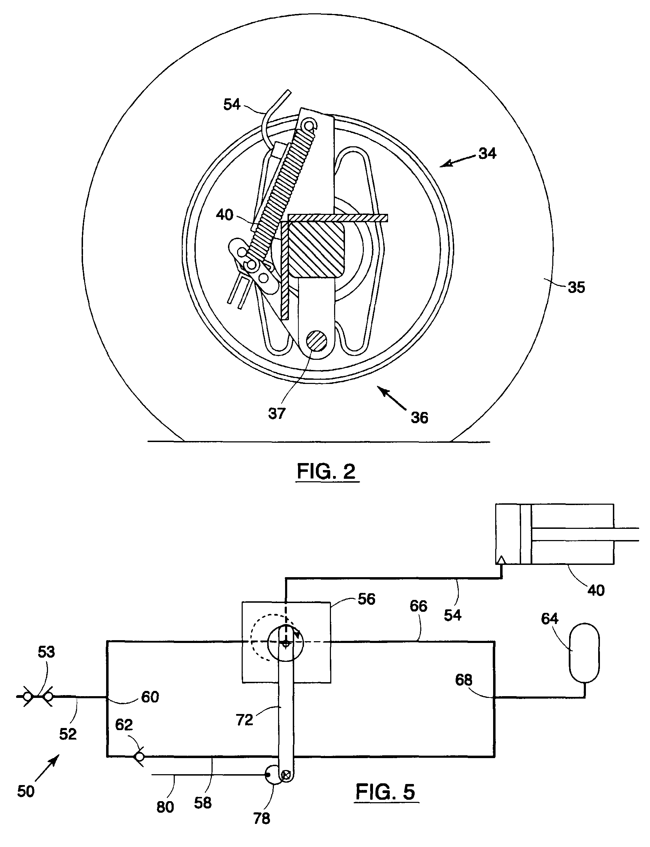

Figure 2 is a detailed, cross sectional view of the axle of the baler of Figure 1;
Figure 3 represents a portion of the towing bar of the baler of Figure 1, showing a portion of the hydraulic circuitry of a service brake apparatus;
Figure 4 is an enlarged view of a part of this circuitry taken in the direction of arrow IV of Figure 1; and
Figure 5 is a hydraulic scheme of the circuitry of Figure 3.

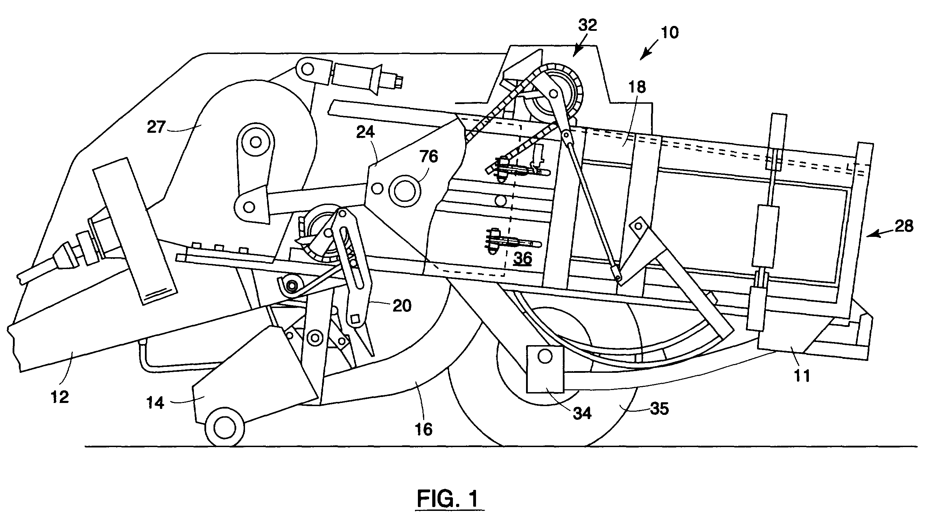

Conventional rectangular balers 10 as illustrated by Figure 1, have a main frame 11 which is equipped with a forwardly extending tongue 12 provided at its front end with hitch means (not shown) for coupling the baler to a towing tractor. A pick-up assembly 14 lifts windrowed crop material off the field as the baler is traveled thereover and delivers such material into the front end of a charge-forming feeder duct 16. The duct communicates at its upper end with an overhead, fore-and-aft extending baling chamber 18 into which crop charges are loaded by a cyclically operating stuffer mechanism 20. Each action of the stuffer introduces a "charge" or "flake" of crop material from the duct into the chamber.

A plunger 24 reciprocates in a fore-and-aft direction within the baling chamber 18 under action of crank arms of a gearbox 27 driven by a transmission shaft which is connected to the PTO shaft of the tractor. The reciprocating plunger 24 pushes each new charge introduced into the baling chamber rearwardly and forms the subsequent charges into a package of crop material, which is forced by the same action of the plunger toward a rearmost discharge aperture 28 of the chamber 18. Before leaving the confines of the baler, each package is securely bound in its final compacted form by a tying mechanism 32.

The main frame 11 is provided with an axle 34 comprising a pair of wheels 35 each provided with a brake mechanism 36 which is operated by a transverse shaft 37 mounted for pivotment by a hydraulic actuator, e.g. a rod-and-cylinder assembly 40.

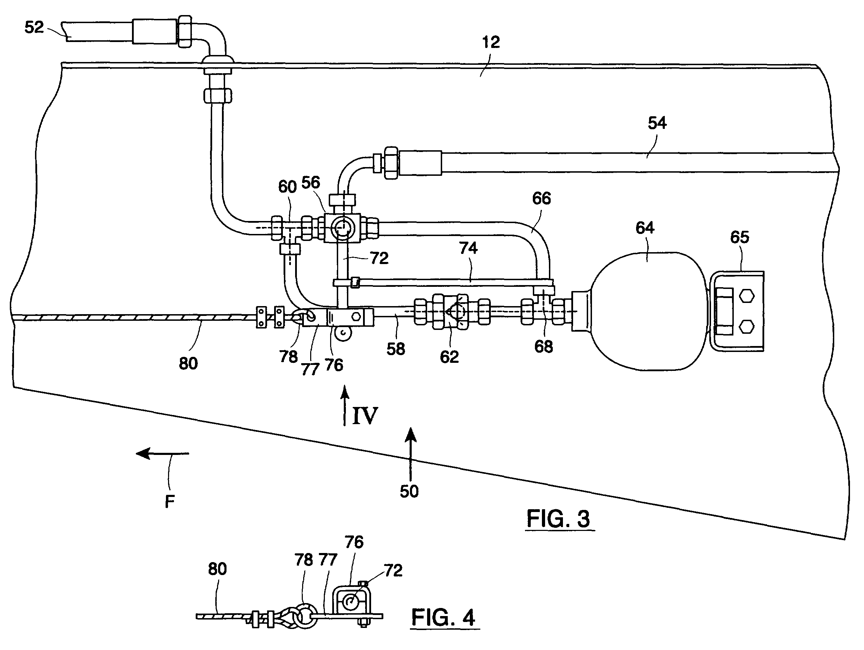

Figure 3 shows a portion of the tongue 12 having mounted thereto hydraulic circuitry 50 which is connected to the hydraulic actuator 40 for the control of the brake mechanism 36. The circuitry 50 comprises a tractor line 52 which is guided along the tongue 12 in the forward direction F to the tractor. The tractor line 52 has at its front end a coupling 53 for connecting the circuitry 50 to the hydraulic brake system of the tractor. The circuitry 50 further comprises a brake line 54 which is connected to the hydraulic actuator 40 of brake mechanism 36. Interconnecting the tractor line 52 and the brake line 54 is a three-way valve 56 which in its normal, service brake position, as shown in Figures 3 and 5, enables the passage of brake fluid from the tractor line 52 to the brake actuator 40.

The circuitry 50 also comprises an accumulator feed line 58 having one end which is branched to a tee 60 before the valve 56. The feed line 58 has a non-return valve 62, which is disposed for allowing free flow of brake fluid to a hydraulic accumulator 64 connected to the other end of the feed line 58. The hydraulic accumulator comprises a pre-pressurized section, e.g. filled with nitrogen at 160 bar, and a reservoir for the brake fluid, separated by a diaphragm from the prepressurized section. The accumulator 64 is affixed to the baler tongue 12 by means of a support 65 which is bolted onto the side of the tongue 12.

An emergency brake line 66 connects a tee 68 in front of the accumulator 64 to the rear port of the three-way valve 56. During normal operation of the baler, the valve 56 and the non-return valve 62 prevent the discharge of fluid from the accumulator to the brake line 54. Brake fluid is pumped into the accumulator 64 by operating the brake pedal in the tractor. The pressurized fluid flows through the tractor line 52, the tee 60, the feed line 58, the non-return valve 62 and the tee 68 to the accumulator 64 and is retained therein by the valves 56 and 62.

The three-way valve 56 has a lever 72 which is normally positioned in a downward direction. To prevent unwanted movement of the lever 72, it is secured by retainer means in the form of a cable tie 74 which is wrapped around the lever and the emergency brake line 66.

The end of the lever 72 is held in a clamp 76 having a plate 77 through which is mounted a safety ring 78. The safety ring receives an eye of a pull cable 80 which is guided along the tongue 12 and has a front end with an eye for attachment to a hook, a pin or a bolt at the rear of the towing vehicle. The length of the cable 80 is chosen such that it is slack when the baler tongue 12 is hitched to the tractor. The movement of the baler to the tractor during normal operations will not be hindered by this cable.

The safety ring 78 is made out of resilient steel and is not closed. Its properties are chosen such that it will open only under a force greater than the force required for breaking the cable tie 74. However the ring 78 opens before the cable 80 exerts a force on the three-way valve 56 which is great enough to cause permanent deformation to the valve 56, its lever 72 or the hydraulic lines 52, 54, 58, 66. Thereby is precluded that every operation of the fail safe braking system would require replacement of any of these components.

At the first use of the baler, the accumulator 64 has to be charged by the brake system of the tractor via the brake line 52. Thereafter the non-return valve 62 maintains the pressure in the accumulator 64. When the baler and the cable 80 have been attached to the tractor and the trailed baler gets detached for some or other reason, e.g. because of failure of the hitch eyebolt or loss of a pin extending therethrough, the forwardly moving tractor will tension the cable 80 and load the lever 72 to break the cable tie 74. The lever 72 of the valve 56 is rotated forwardly and upwardly to a safety brake position, thereby connecting the pressurized fluid in the accumulator 64 to the brake line 54 and loading the hydraulic actuator 40 of the baler brakes. Hence the detached baler is retarded and stopped instantly. Meanwhile the safety ring 78 opens and the cable 80 is released from the lever 72 before it can cause any damage to the circuitry 50.

In order to remove the pressure from the brake actuator 40 and enable further movement of the baler, it suffices to rotate the lever 72 back to its downward position. The brake fluid can then flow back via the tractor line 52.

It is worth noting that in case the operator might neglect to rotate the lever 72 back to the service brake position after actuation of the fail safe braking system, proper braking action is still ensured. Indeed, when the lever 72 is kept in its forward position, brake fluid from the tractor will flow through the tractor line 52, the feed line 58, the non-return valve 62 and the emergency brake line 66 to the three-way valve 56 and therefrom to the brake line 54. Hence, in any position of the lever 72, the brakes of the baler can always be actuated by the brake system of the tractor.

It will be appreciated that thus is provided a simple, yet reliable system for immobilizing a pulled implement in case its connection to the towing vehicle gets broken.

Although the present invention has been described with reference to a baler, it will be obvious to the skilled person that it equally can be used in other agricultural implements, including forestry equipment, which are equipped for being trailed behind a tractor, such as pull-type forage harvesters, drilling machines and loader wagons. In cases where a plurality of brake cylinders is installed on the implement, it may be required to use of plurality of hydraulic accumulators for providing the volume necessary for actuating the cylinders.

## Claims

1. An agricultural implement (10), comprising:
a frame (11);
a pair of wheels (35) mounted for rotation to said frame;
means for attaching said frame to a towing vehicle; and
service brake apparatus (36) for immobilizing said wheels to said frame, said brake apparatus comprising a hydraulic brake actuator (40) and hydraulic circuitry (50) which includes coupling means (52, 53) for connecting said circuitry (50) to a hydraulic brake circuit of the towing vehicle, thereby enabling operation of said brake actuator (40) by means of the brake circuit of the towing vehicle;
characterized in that said brake apparatus further comprises accumulator means (64) connected to said circuitry (50) via valve means (56) for operating said brake actuator (40) when said implement becomes detached from said towing vehicle.

2. An agricultural implement according to claim 1, characterized in that said valve means (56) is movable between a service brake position in which said brake actuator (40) is connected to the brake circuit of the towing vehicle and a safety brake position in which said brake actuator (40) is connected to said accumulator means (64).

3. An agricultural implement according to claim 2, characterized in that said circuitry (50) comprises means (53, 58, 60) allowing operation of said brake actuator (40) by the brake circuit of the towing vehicle in both the service brake and safety brake positions of the valve means (56).

4. An agricultural implement according to claim 3, characterized in that said valve means comprise a three-way valve (56) having three ports connected to lines connected to said brake actuator (40), to said accumulator means (64) and said coupling means (52) respectively.

5. An agricultural implement according to any of the preceding claims, characterized in that said valve means (56) comprise mechanical control means (72) operable by linkage means (76-78, 80) provided for linkage to said towing vehicle.

6. An agricultural implement according to claim 5, characterized in that said linkage means (76-78, 80) comprise a safety ring (78), which is operable to open under a force greater than the force needed to operate said mechanical control means (72).

7. An agricultural implement according to claim 5 or 6, characterized in that said mechanical control means comprise a lever (72) and said linkage means comprise a cable (80) connected to said lever.

8. An agricultural implement according to any of the claims 5 to 7, when appended to claim 2, characterized in that said brake apparatus includes retainer means (74) connected to said mechanical control means (72), said retainer means being operable to keep said valve means (56) in said service brake position, until broken by said linkage means.

9. An agricultural implement according to claim 8, when appended to claim 6, characterized in that said retainer means comprise at least one cable tie (74) installed over said lever (72).

10. An agricultural implement according to any of the preceding claims, characterized in that said circuitry (50) comprises means permitting charging of said accumulator means (64) by the hydraulic brake circuit of the towing vehicle.

11. An agricultural implement according to claim 10, characterized in that said charging means (58, 60, 62) comprise a non-return valve (62) installed in a line (58) parallel to said valve means (56).

12. An agricultural implement according to any of the preceding claims characterized in that said implement is an agricultural baler.
